# FASCICULE DE BREVET EUROPEEN

(11) **EP 0 790 903 B1**
(45) Date de publication et mention de la délivrance du brevet: **13.10.1999**
(21) Numéro de dépôt: 96927737.5
(22) Date de dépôt: 02.08.1996
(51) Int. Cl.: B60N 3/00

(54) **ACCESSOIRE EN FORME DE MALLETTE POUR VOITURE AUTOMOBILE**
KOFFERTYP-ACCESOIRE FÜR MOTORFAHRZEUGE
CASE TYPE ACCESSORY FOR MOTOR VEHICLES

(30) Priorité: 04.08.1995 FR 9509505
(43) Date de publication de la demande: 27.08.1997
(73) Titulaire: Blanc-Rosset, André, 75017 Paris (FR)
(72) Inventeur: Blanc-Rosset, André, 75017 Paris (FR)
(74) Mandataire: Lejet, Christian
(86) Numéro de dépôt international: FR9601238
(87) Numéro de publication internationale: WO9706028

(56) Documents cités:
- WO-A-94/06647
- DE-C- 3 421 547
- DE-U- 9 205 820
- FR-A- 2 656 841
- GB-A- 2 029 346
- US-A- 3 049 374
- US-A- 3 951 486
- US-A- 4 792 183
- US-A- 5 269 229
- US-A- 5 370 060

## Description

La présente invention concerne un accessoire autonome en forme de mallette pour une voiture automobile ou équivalent permettant aux passagers assis à l'arrière du véhicule de disposer d'une plate-forme amovible pour le repas, la lecture, l'écriture, etc...

On sait que les dossiers des sièges de certains types de véhicules sont équipés dès l'origine de simples tablettes rabattables dont l'usage est limité. Pour qu'une telle tablette conserve une position horizontale lorsqu'elle est ouverte, quel que soit l'angle d'inclinaison du dossier du fauteuil qui en est équipé, il est nécessaire de la fixer à des montants rigides solidaires de la base du fauteuil. Ceci implique une conception très spécifique et très lourde du siège proprement dit. C'est pourquoi on ne trouve de telles tablettes essentiellement que dans les trains et dans les avions.

Cependant, des documents décrivent des solutions plus spécifiques à une utilisation dans une voiture automobile. Par exemple, le document FR-A-2 529 061 relate un 'plateau-support pour activités diverses pour passagers à l'intérieur d'un véhicule'. Le plateau comporte un piètement, réglable en hauteur, sur la base duquel le passager pose les pieds pour maintenir l'ensemble. Cette solution permet d'obtenir un plateau horizontal ou, tout au moins, un plateau parallèle à la base de son piètement. L'ensemble n'est donc pas fixé et l'utilisateur a un rôle actif et permanent dans le maintien de l'ensemble. En l'absence d'un utilisateur d'une taille suffisante pour poser ses pieds sur la base, l'ensemble devient totalement inutilisable. Il est, de plus, très encombrant.

Le document FR-A-2 656 841 concerne un plateau pliant constitué de deux plaques que l'on peut déplier de manière à ce que l'une d'elle soit appliquée contre le dossier du siège. La structure est rigidement fixée aux montants de l'appui-tête du siège ; de ce fait, le niveau du plateau est situé en haut du dossier du siège correspondant, ce qui est impraticable pour une fonction de plateau-repas ou d'écritoire. En outre, l'horizontalité n'est pas définie et le plateau doit être verrouillé manuellement en position d'utilisation par serrage de plusieurs mollettes travaillant par friction angulaire. Le cas d'un éventuel desserrage des mollettes du aux vibrations du véhicule n'est pas envisagé. Par ailleurs, le temps d'installation et de dépose reste très long.

Le document FR-A-2 707 570 décrit un 'plateau de bord' fixé par l'intermédiaire des montants d'un appui-tête. Un système de fixation permet au plateau de prendre une position verticale ou une position horizontale. La partie mobile du plateau peut comprendre des parties prévues pour le maintien d'objets, telle une bouteille. Ce dispositif est fixé de façon souple par l'intermédiaire des montants de l'appui-tête du siège. Une sangle passe sur la face utile du siège ainsi équipé pour stabiliser le dispositif. L'horizontalité du plateau ouvert n'est donc définie que par rapport à l'angle du dossier du siège avec la verticale, ce qui implique ni une interchangeabilité du dispositif (puisque non réglable), ni même une modification de l'angle du dossier par la personne assise sur le siège ainsi équipé.

Le document US-A-5 269 229 concerne un plateau rabattable dont la distance horizontale (lorsqu'il est ouvert) à l'utilisateur est ajustable pour le confort de ce dernier. A cette effet, le plateau, lorsqu'il est horizontal, est susceptible de coulisser sensiblement horizontalement plus ou moins à l'intérieur d'un cadre sensiblement vertical. En outre, même si ce plateau est un accessoire rapporté, il reste quelque peu sensiblement non amovible, ou tout au moins amovible avec grande difficulté. Enfin, l'horizontalité du plateau n'est pas ajustable en fonction de l'inclinaison du siège auquel il est fixé.

Le document GB-A-2 029 346 décrit, pour sa part, une mallette classique venant se fixer par des bras rigides extensibles au sommet du dossier du siège-porteur, et formant également conteneur de plateau-repas. L'amovibilité de la mal dette est liée à l'existence préalable des bras comportant une pluralité de vis de fixation rendant toute manoeuvre délicate. En outre, l'horizontalité du plateau utile n'est pas assurée en fonction de l'inclinaison du siège, puisqu'elle n'est obtenue que par un bombage déterminé et fixe du couvercle de la mallette.

Le document DE-U-92 05 820 concerne un plateau amovible rustique dépourvu de tout couvercle et dont l'horizontalité n'est pas garantie. La mise en position verticale du plateau ne semble pas être prévue, et il faut complètement l'ôter pour le plier.

La présente invention a pour but d'obvier aux divers inconvénients précités.

On connait, par ailleurs, de nombreux documents dans le domaine des plateaux-repas. Par exemple, les documents FR-A-2 702 643 et FR-A-2 628 516, parmi d'autres, décrivent des plateaux alvéolés notamment utilisés pour les repas dans l'aviation et dans la restauration rapide. De même, le document US-A-3 049 374 concerne un dispositif de conteneur pour plateau-repas fixé au siège avant. Ce dispositif, assez classiquement utilisé dans les avions, n'est nullement amovible. De façon générale, ces plateaux sont utilisés en coopération avec les tablettes rabattables précitées et ont pour seul but de faciliter le service dans un environnement ne présentant pas une grande stabilité.

L'invention concerne donc un accessoire en forme de mallette pour une voiture automobile ou équivalent comportant au moins deux sièges disposés l'un derrière l'autre et dits siège avant et siège arrière, le siège avant étant pourvu d'un appui-tête ou équivalent ; l'accessoire est prévu pour être placé de façon amovible sur le dossier du siège avant de manière à constituer une plate-forme utilitaire à l'usage d'un passager assis sur le siège arrière. Cet accessoire en forme de mallette comprend essentiellement un boîtier, un cadre rigide et un moyen de stabilisation.

Cet accessoire en forme de mallette doit donc pouvoir être utilisé quelque soit l'angle d'inclinaison du dossier du siège avant, et quelque soit le véhicule utilisé. Il doit également être peu coûteux pour avoir des applications domestiques et s'adapter à tout type de véhicule.

Selon l'invention, le boîtier est monté à rotation autour d'un axe situé le long du bord postérieur du boîtier et de la zone basse du cadre rigide, de manière à pouvoir être soit dans un plan sensiblement vertical, en position de non-utilisation, soit dans un plan sensiblement horizontal sensiblement perpendiculaire au plan du cadre rigide, en position d'utilisation. La partie haute du cadre rigide est suspendue par une unité de suspension et de réglage en hauteur aux montants de l'appui-tête du siège avant. Le moyen de stabilisation est constitué par une paire de bras réglables en longueur et prévus pour venir reposer sur le dossier du siège avant, de manière à ajuster et maintenir les plans respectivement sensiblement horizontal et vertical.

De préférence, le boîtier est creux de manière à déterminer un compartiment susceptible d'accueillir, par exemple, un plateau intérieur encastré amovible et éventuellement pourvu d'empreintes de formes diverses. Un couvercle, par exemple, monté à rotation autour d'un axe parallèle à celui du boîtier, peut favorablement permettre de fermer le compartiment.

Un moyen de fixation complémentaire peut éventuellement relier l'accessoire à une partie du siège avant pour assurer le maintien et une stabilité de l'accessoire dans toutes les conditions.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle trois planches de dessins sont annexées sur lesquelles :
La Figure 1 représente schématiquement en coupe un accessoire en forme de mallette conforme à l'invention, avec son boîtier en position d'utilisation, placé sur le dossier d'un siège avant ;
La Figure 2 représente schématiquement en coupe l'accessoire de la Figure 1 en état fermé ;
La Figure 3 illustre schématiquement en coupe l'extrémité distale libre d'un bras utile pour mettre en oeuvre l'invention ;
La Figure 4 représente, en perspective et ouvert, un mode de réalisation de l'accessoire en forme de mallette selon l'invention ;
La Figure 5 représente, en perspective et partiellement fermé, un mode de réalisation de l'accessoire selon l'invention ;
La Figure 6 représente schématiquement en coupe un mode de réalisation préféré de l'unité de suspension et de réglage en hauteur de l'accessoire ; et
La Figure 7 illustre un mode de fixation de l'unité sur l'appuitête.

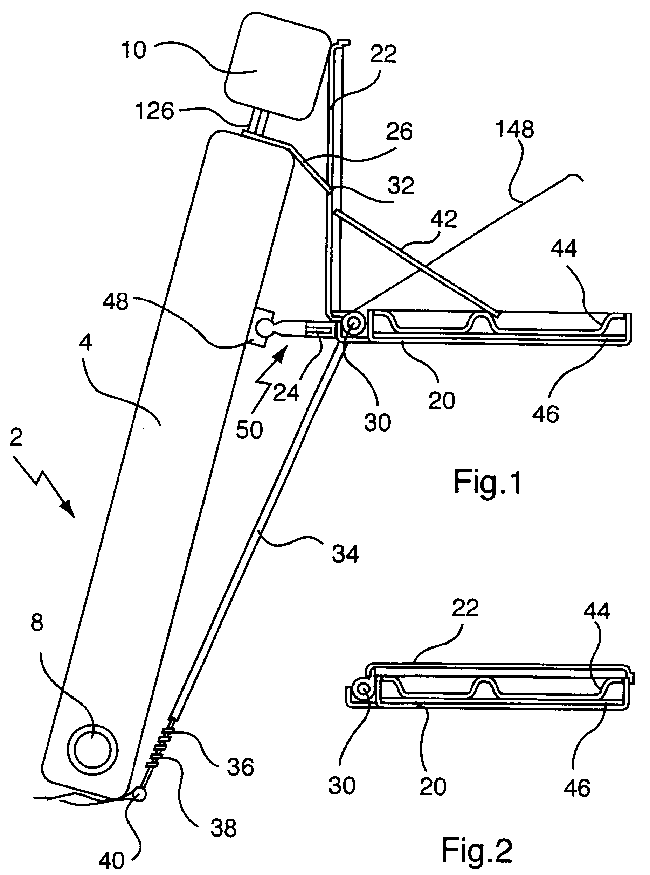

En référence maintenant aux Figures sur lesquelles on a représenté schématiquement un accessoire en forme de mallette selon les enseignements de l'invention, et, plus particulièrement à la Figure 1, le siège avant 2 comporte un dossier 4 dont l'angle d'inclinaison par rapport à sa partie sensiblement horizontale peut être modifié en actionnant une mollette 8. Des appuis-tête 10 sont prévus au sommet du dossier 4 auquel ils sont reliés par des montants 126. Le siège arrière où l'utilisateur de l'accessoire doit s'asseoir n'a pas été représenté dans un but de clarté.

L'accessoire en forme de mallette comprend essentiellement un boîtier 20, un cadre rigide 22, une unité de suspension et de réglage en hauteur et un moyen de stabilisation. Ce dernier, logé dans des parties latérales du boîtier 20, est constitué par une paire de bras rétractables 24 venant prendre appui fermement sur la face postérieure du dossier 4 du siège avant 2.

L'unité de suspension et de réglage en hauteur de l'accessoire, par exemple une cordelette 26 (ou équivalent), permet de suspendre l'accessoire aux montants 126 de l'appui-tête 10. La longueur de la cordelette 26 est telle que l'accessoire puisse rester amovible, c'est à dire puisse être ôté de l'appui-tête 4. La longueur de cette cordelette est, de préférence, réglable de manière à ce que la hauteur d'utilisation de l'accessoire puisse être ajustée en fonction de la taille et/ou du désir de l'utilisateur. Ainsi, par exemple, le point de fixation 32 de la cordelette au cadre 22 peut être monté sur un rail (non représenté) permettant son coulissement sur une certaine longueur, de manière à atteindre ce but. Alternativement, la cordelette peut être fixée de manière à pouvoir coulisser à l'intérieur d'une rainure pratiquée dans le cadre 22. Dans ce cas, plusieurs points possibles de fixation de la cordelette au cadre sont prévus. Alternativement encore, une extrémité de la cordelette peut venir s'enrouler sur un cylindre pourvu d'une mollette de commande à frein et fixé au cadre 22.

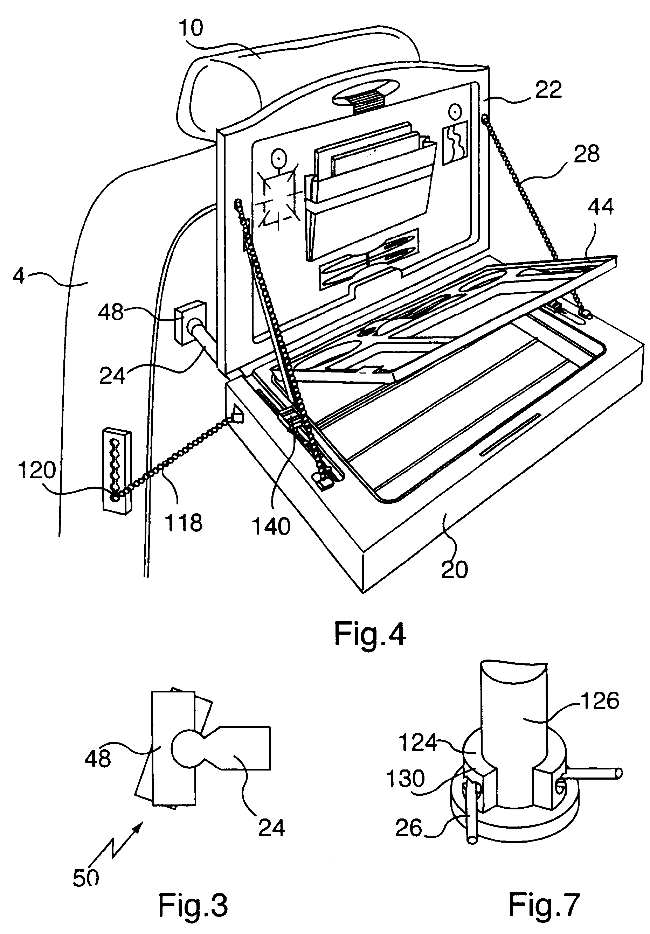

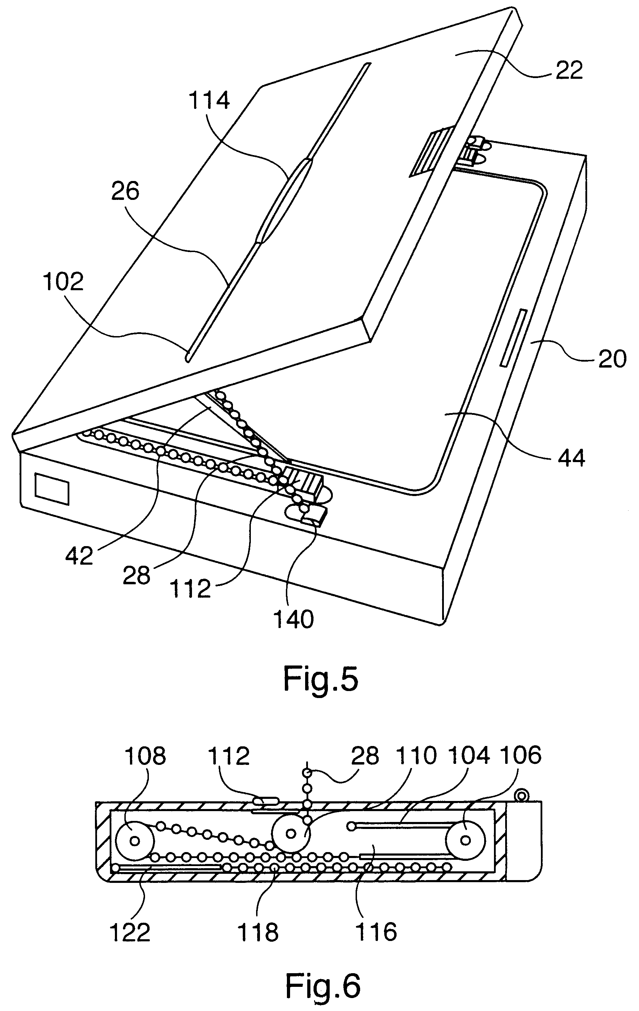

Un mode préféré de réalisation d'une telle unité de suspension a été partiellement représenté, en coupe, sur la Figure 6 en référence au mode de réalisation illustré sur les Figures 4 et 5. L'unité est ici escamotable et la cordelette 26 est prolongée de part et d'autre par une chaînette 28 comportant une pluralité de boules successives rapprochées. Un moyen élastique 104 prolongeant chaque chaînette 28 rappelle l'ensemble en position de repos par l'intermédiaire d'une pluralité de poulies 106, 108 et 110, de manière à permettre l'emmagasinage de la chaînette 28 dans les chambres latérales 116 prévues à cet effet dans le boîtier, lorsque l'accessoire en forme de mallette est fermé, ainsi que le passage de la chaînette selon un angle variable lorsque l'accessoire en forme de mallette est ouvert. Une fourche de verrouillage 112, solidaire du boîtier 20, peut être déplacée pour bloquer la chaînette 28 en position entre deux boules adjacentes. Ainsi, l'utilisateur peut aisément ouvrir la mallette ainsi constituée, et prendre l'olive de préhension 114 (Figure 5), judicieusement dissimulée avec la cordelette 26 dans une rainure 102 pratiquée sur la face externe du cadre rigide 22 et où elles sont logées, pour passer la cordelette par dessus l'appui-tête 10, puis bloquer l'ensemble à la hauteur souhaitée au moyen de la fourche de verrouillage 112 par simple déplacement de celle-ci. La fermeture de l'ensemble sera simplement obtenue par l'opération inverse, les moyens élastiques 104 rappelant chaque chaînette 28 dans la chambre correspondante 116 prévue sur les parois latérales du boîtier 20. Il faut noter que de telles fourches de verrouillage associées aux chaînettes à boules successives rapprochées apportent une grande précision dans le réglage en hauteur de l'accessoire.

Que la cordelette 26 soit prolongée et/ou remplcée par une chaînette à boules 28 ou soit constituée par une corde conventionnelle, il peut être utile, pour une meilleure stabilité de l'ensemble, qu'elle soit bien fixée à l'appui-tête et ne puisse pas glisser sur les montants de celui-ci. A cet effet, comme représenté sur la Figure 7, une couronne 124 peut équiper au moins un des montants 126 de l'appui-tête 10. Une telle couronne détermine une gorge 130 venant mordre la cordelette 26 lorsque celle-ci y est introduite. La gorge 130 pourra favorablement présenter une pluralité de dents à cet effet comme représenté sur la Figure 7, ou des rétrécissements successifs.

On voit ainsi que la face externe du cadre rigide 22 joue également un rôle pour la stabilité de l'accessoire puisqu'elle détermine une surface de contact ténue avec les faces postérieures de l'appui-tête 10 et/ou de la zone supérieure du dossier 4. En effet, l'unité de suspension engendre, lorsque la cordelette 26 est mise en place sur les montants 126 de l'appui-tête 10, une force tendant à appliquer la face externe du cadre rigide 22 contre les faces postérieures précitées. Il est, en outre, avantageux que la surface de contact de la face externe soit légèrement rugeuse, par exemple granuleuse, pour contribuer à une bonne adhérence.

Selon un mode de réalisation de l'invention, mais non obligatoire pour la mise en oeuvre de l'accessoire, pour assurer une stabilité complémentaire, un moyen de fixation complémentaire peut favorablement relier une partie basse de l'accessoire à une partie basse du siège avant 2, comme représenté sur la Figure 1. Ce moyen de fixation complémentaire comprend, par exemple, une sangle 34 prolongée par un moyen de ressort 36, et comporte à son extrémité un mousqueton (ou équivalent) 38 coopérant avec un anneau 40 fixé sous le ou au siège 2. Ce moyen de fixation complémentaire a l'avantage de maintenir l'accessoire bien en place lorsque le véhicule ainsi équipé est en mouvement.

Selon un mode préféré alternatif illustré sur la Figure 4, ce moyen de fixation complémentaire relie les chambres latérales 116 du boîtier 20 au dossier 4 du siège avant 2. Il comprend, par exemple, deux sangles escamotables ou retractables, par exemple constituées chacune par une chaînette 118 à boules successives rapprochées, dont la boule d'extrémité est susceptible de pénétrer dans une gâche correspondante 120 fixée, par exemple latéralement, au dossier 4 du siège avant. Une telle gâche sera favorablement constituée par une plaque graduée 120, préalablement fixée sur les montants latéraux du dossier 4 du siège avant 2. Bien évidemment, un moyen élastique 122 (Figure 6) est prévu pour exercer une force correspondante de stabilisation de l'ensemble et rappeler les sangles dans leurs logements respectifs après utilisation. Il est clairement préférable de mettre en oeuvre ici deux telles chaînettes 118 respectivement emmagasinées dans les chambres latérales 116 du boîtier 20. Un moyen de blocage (non représenté), par exemple également du type à fourche déplaçable, peut être favorablement prévu pour fixer la longueur utile de chaque chaînette 118 et maintenir celle-ci en tension pour conforter encore la stabilité de l'ensemble.

Le boîtier 20 est monté à rotation autour d'un axe 30 situé sur le long du bord postérieur du boîtier 20 et de la zone basse du cadre rigide 22. Il peut ainsi prendre une première position dite de non-utilisation, dans laquelle le boîtier 20 et le cadre 22 sont dans des plans parallèles sensiblement verticaux, et une deuxième position dite d'utilisation, dans laquelle les plans du cadre 22 et du boîtier 20 sont sensiblement perpendiculaires. Un moyen d'équerre 42, de préférence constitué par une barrette rigide à blocage automatique par encoche, notamment prévue pour éviter une fermeture intempestive de l'accessoire, peut favorablement déterminer l'angle d'ouverture fonctionnel maximal de l'accessoire. Une telle barrette est naturellement mobile par glissement et se dégage par simple pression du doigt. Ce moyen d'équerre 42 n'est, toutefois, pas une nécessité, puisque cet angle maximal d'ouverture peut également être déterminé par des butées judicieusement prévues au niveau de l'axe de rotation 30, et/ou par déplacement de la fourche 112 lorsque la cordelette 26 est du type chaînette comme précédemment décrit.

De préférence, le boîtier 20 est suffisamment creux, pour déterminer un compartiment susceptible d'accueillir différents équipements en fonction du but précis de l'accessoire en forme de mallette.

Sur les Figures, un plateau intérieur amovible 44 est encastré dans le boîtier 20. Le fond 46 du compartiment peut, par exemple, être revêtu d'un matériau anti-dérapant et/ou présenter des rainures transversales. Le plateau intérieur 44 est favorablement pourvu d'empreintes alvéolées prévues pour recevoir assiette, cuillère, fourchette, couteau et verre, dans une version destinée à constituer un boîtier-repas (voir Figure 4), mais il peut également être pourvu d'empreintes destinées à recevoir des crayons, gomme et papier, dans une version de type écritoire ou micro-bureau. De préférence, juste une face de ce plateau intérieur 44 présente des empreintes, l'autre face étant plane. Ce plateau intérieur 44 présente alors l'avantage d'être totalement réversible, une face pouvant être utilisé en tant qu'écritoire ou plateau de lecture, l'autre en tant que tablette pour repas.

Sous ce plateau intérieur 44, ou lorsque ce plateau intérieur 44 n'est pas présent, le compartiment peut favorablement accueillir un micro-ordinateur portable, un téléphone mobile, des jeux électroniques, des revues et journaux, etc... Des empreintes peuvent être prévues à cet effet. Une cavité est également prévue, par exemple le long du bord postérieur du boîtier 20 pour recevoir une batterie électrique ou un jeu de piles. On comprendra que les empreintes du plateau intérieur 44 et/ou du compartiment peuvent affecter des formes diverses en fonction de l'utilisation essentielle de l'accessoire.

Un couvercle 148 (Figure 1) peut également être prévu pour fermer le compartiment ainsi créé. Ce couvercle 148 est, soit amovible, soit monté à rotation autour d'un axe parallèle à celui du boîtier 20, soit à rotation autour de cet axe 30, comme représenté Figure 1.

De façon préférée, ce plateau intérieur 44 est amovible, mais il peut aussi être monté sur une charnière correspondante pour pouvoir libérer l'accès au compartiment précité. Un moyen de fixation, tel que des pastilles aimantées ou équivalent, pourra, de toute façon, être utilisé favorablement pour maintenir le plateau intérieur 44 en position sensiblement verticale contre la face interne du cadre rigide 22.

A la périphérie du boîtier 20, est prévu, de façon avantageuse, un moyen de niveau encastré de manière à permettre un ajustement fin d'au moins un des plans vertical et horizontal. Ce moyen peut être constitué par tout moyen conventionnel, tel un niveau à bulle. L'utilisateur a alors simplement un confort complémentaire qui peut se révéler très utile, par exemple lorsqu'il désire poser un verre plein sur le boîtier.

Le réglage de l'horizontalité (ou de la verticalité) du boîtier 20 est obtenu grace au moyen de stabilisation. Ce moyen est constitué de deux bras de stabilisation 24 de longueur variable et prévus pour faire saillie, comme illustré sur la Figure 4, des parois latérales du boîtier 20, pour venir reposer sur le dossier 4 du siège avant 2. Un moyen de manoeuvre et de verrouillage (140 sur les Figures 4 et 5), par exemple une mollette de serrage, un jeu de plots ou une glissière, permet d'en régler et d'en fixer la longueur. De façon favorable, lorsqu'ils sont rétractés, les bras 24 compressent un moyen de ressort (non représenté) qui aidera à la mise en place du boîtier 20 ultérieurement.

De préférence, un patin 48, par exemple présentant une surface anti-dérapante, est prévu à l'extrémité distale libre de chaque bras de stabilisation 24 pour éviter de détériorer la face postérieure du dossier 4 du siège avant 2. Le patin 48 est favorablement fixé à l'extrémité distale libre du bras 24 par un moyen de rotule représenté schématiquement sur la Figure 1 ou sur la Figure 3, sous la référence 50, pour s'adapter au dossier 4. Un moyen équivalent à ce moyen de rotule pourra être utilisé, tel un ressort à boudin à spires rapprochées.

Dans un exemple de réalisation, l'accessoire en forme de mallette selon l'invention, en état fermé, présente une longueur comprise entre 45 et 60 cm, une largeur comprise entre 25 et 30 cm, et une épaisseur comprise entre 5 et 8 cm environ. Les parties essentielles de cet accessoire sont réalisées, par exemple, par injection d'un matériau plastique rigide, et de manière à ce que le boîtier présente des coins et des bords arrondis pour des raisons de sécurité.

Dans un exemple de réalisation du type mini-bureau dans lequel l'accessoire en forme de mallette inclut un ordinateur portable et/ou un téléphone portable, ou bien lorsqu'il est pourvu d'un dispositif d'éclairage, d'un moyen de batterie ou de tout autre dispositif fonctionnant électriquement, un cordon électrique susceptible d'être relié à la batterie du véhicule peut favorablement être prévu pour assurer une alimentation électrique de l'ensemble.

Comme on peut le constater, l'accessoire en forme de mallette selon l'invention obvie aux inconvénients de l'art antérieur et apporte les avantages considérables précités, notamment une facilité d'emploi et une grande stabilité. Il peut être utilisé quelque soit l'angle d'inclinaison du dossier 4 du siège avant 2 ; il est totalement amovible et d'une manipulation aisée, et peut être rangé facilement lorsqu'il n'est pas utilisé ; il est, en outre, utilisable en tant que simple mallette hors de la voiture ; il est également stable dans toutes les conditions d'utilisation ; enfin, il est peu coûteux et simple de réalisation.

Bien que l'on ait représenté et décrit ce que l'on considère actuellement être les modes de réalisation préférés de la présente invention, il est évident que l'Homme de l'Art pourra y apporter différents changements et modifications sans sortir du cadre de la présente invention tel que défini ci-après.

Par exemple, pour des raisons élémentaires de sécurité, il peut être prévu que l'axe 30 soit un axe très fragile qui se rompe immédiatement en cas de choc si la mallette est ouverte, de manière à protéger l'utilisateur potentiel. Dans le même esprit, le bord antérieur de la mallette peut contenir un sac à air automatiquement gonflable en cas de choc, également pour éviter que le boîtier 20 puisse constituer un objet contendant ayant tendance à blesser costalement l'utilisateur.

Bien évidemment, l'accessoire en forme de mallette qui vient d'être décrit peut très aisément être mis en place ou ôté sans nécessiter un outillage approprié, ni demander un savoir-faire spécifique, ni requérir un temps non-raisonnable de manoeuvre. En outre, l'accessoire en forme de mallette, notamment lorsqu'il constitue un mini-bureau, peut être utilisé hors du véhicule quel qu'il soit et n'est pas lié à celui-ci. Enfin, il est compatible avec substantiellement tous les types de véhicules automobiles.

## Revendications

1. Accessoire en forme de mallette pour une voiture automobile ou équivalent comportant au moins deux sièges disposés l'un derrière l'autre et dits siège avant (2) et siège arrière, le dit siège avant (2) étant pourvu d'un appui-tête (10) ou équivalent, le dit accessoire étant prévu pour être placé de façon amovible sur le dossier du dit siège avant (2) de manière à constituer une plate-forme utilitaire à l'usage d'un passager assis sur le dit siège arrière, et comprenant essentiellement un boîtier (20), un cadre rigide (22) et un moyen de stabilisation (24), le dit boîtier pouvant être soit dans un plan sensiblement vertical, en position de non-utilisation, soit dans un plan sensiblement horizontal sensiblement perpendiculaire au plan du dit cadre rigide (22), en position d'utilisation, la partie haute du dit cadre rigide (22) étant suspendue par une unité de suspension aux montants du dit appui-tête (10) du dit siège avant (2),
**caractérisé en ce que**
le dit boîtier (20) est monté à rotation autour d'un axe (30) situé le long du bord postérieur du dit boîtier (20) et au-dessous de la zone basse du dit cadre rigide (22); et que
le dit moyen de stabilisation est constitué par une paire de bras (24) réglables en longueur, faisant saillie des parois latérales du dit boîtier (20) et prévus pour venir prendre appui fermement sur la face postérieure du dossier (4) du dit siège avant (2), de manière à ajuster et maintenir les dits plans respectivement sensiblement horizontal et vertical.

2. Accessoire selon la revendication 1, caractérisé en ce que le dit boîtier (20) est creux de manière à déterminer un compartiment susceptible d'accueillir différents équipements.

3. Accessoire selon la revendication 2, caractérisé en ce que le dit compartiment accueille un plateau intérieur encastré amovible (44).

4. Accessoire selon la revendication 3, caractérisé en ce que le dit plateau intérieur (44) est pourvu d'empreintes de formes diverses.

5. Accessoire selon la revendication 3 ou 4, caractérisé en ce qu'il comprend un moyen de fixation du dit plateau intérieur (44) contre la face interne du dit cadre rigide (22).

6. Accessoire selon l'une quelconque des revendications 2 à 5 caractérisé en ce que le dit boîtier creux (20) comporte un couvercle additionnel (48) permettant de fermer le dit compartiment.

7. Accessoire selon la revendication 6 caractérisé en ce que le dit couvercle additionnel (48) est monté à rotation autour d'un axe (30) parallèle à ou confondu avec celui du dit boîtier (20).

8. Accessoire selon l'une quelconque des revendications précédentes, caractérisé en ce que la dite unité de suspension et de réglage en hauteur et le dit moyen de stabilisation sont au moins partiellement logés dans des chambres latérales (116) du dit boîtier (20).

9. Accessoire selon l'une quelconque des revendications précédentes, caractérisé en ce que la dite unité de suspension et de réglage en hauteur est constituée au moins partiellement par des chaînettes (28), des moyens élastiques (104) rappelant la dite unité en position de repos par l'intermédiaire d'une pluralité de poulies (106, 108, 110).

10. Accessoire selon la revendication 9, caractérisé en ce que la dite chaînette (28) est constituée par une pluralité de boules successives rapprochées, au moins une fourche de verrouillage (112), solidaire du dit boîtier (20), pouvant être déplacée entre deux boules adjacentes pour bloquer la dite chaînette (28) en position tendue après ouverture du dit accessoire.

11. Accessoire selon la revendication 8, 9 ou 10, caractérisé en ce qu'une rainure transversale (102) est pratiquée sur la face externe du dit cadre rigide (22) en appui sur le dit dossier (4), pour loger la dite cordelette (26) et une éventuelle olive de préhension (114).

12. Accessoire selon l'une quelconque des revendications précédentes, caractérisé en ce qu'une couronne (124) équipe au moins un montant (126) du dit appui-tête (10), la dite couronne (124) déterminant une gorge (130) venant mordre la dite cordelette (26) lorsque celle-ci y est introduite.

13. Accessoire selon l'une quelconque des revendications précédentes, caractérisé en ce que l'extrémité distale libre de chacun des dits bras (24) est pourvue d'un patin (48) présentant une surface de contact avec la face postérieure du dossier (4) du dit siège avant (2), le dit patin (48) étant monté à rotule ou équivalent à la dite extrémité distale libre.

14. Accessoire selon l'une quelconque des revendications précédentes, caractérisé en ce qu'au moins un moyen de fixation complémentaire (34, 38; 118, 122) relie le dit accessoire à une partie du dit siège avant (2) ou du dossier (4) de celui-ci.

15. Accessoire selon la revendication 14, caractérisé en ce que le dit moyen de fixation complémentaire comprend au moins une sangle (34, 118) prolongée par un moyen de ressort (38, 122), et dont une extrémité est prévue pour coopérer avec le dit siège avant (2).

16. Accessoire selon la revendication 15, caractérisé en ce que le dit moyen de fixation comprend deux sangles (118) escamotables dans les dites chambres latérales (116), chacune présentant une extrémité susceptible de pénétrer dans une gâche correspondante (120) fixée latéralement au dossier (4) du dit siège avant (2).

17. Accessoire selon la revendication 16, caractérisé en ce que les dites sangles (118) sont constituées par des chaînettes à boules successives rapprochées, un moyen de blocage étant éventuellement prévu pour en fixer la longueur.

18. Accessoire selon l'une quelconque des revendications précédentes, caractérisé en ce qu'un moyen de niveau est encastré dans le dit boîtier (20), de manière à permettre un ajustement fin d'au moins un des dits plans sensiblement vertical et horizontal.

19. Accessoire selon l'une quelconque des revendications précédentes, caractérisé en ce que le dit cadre rigide (22) constitue un couvercle pour le dit boîtier (20) lorsque l'accessoire est en position de non-utilisation.

20. Accessoire selon l'une quelconque des revendications précédentes, caractérisé en ce qu'un moyen d'équerre rigide (42) relie le dit cadre (22) et le dit boîtier (20) pour déterminer l'angle fonctionnel maximal d'ouverture entre eux.

21. Accessoire selon l'une quelconque des revendications précédente, caractérisé en ce qu'un cordon électrique susceptible d'être relié à la batterie du dit véhicule est prévu pour assurer une alimentation électrique des dispositifs fonctionnant électriquement inclus dans le dit accessoire.

22. Accessoire selon l'une quelconque des revendications précédentes, caractérisé en ce que le dit axe (30) est un axe fragile qui se rompt en cas de choc si le dit accessoire en forme de mallette est ouvert.

23. Accessoire selon l'une quelconque des revendications précédentes, caractérisé en ce que le bord latéral antérieur du dit accessoire contient un sac à air automatiquement gonflable en cas de choc.

## Claims

1. Accessory in the form of an attaché case for a motor car or equivalent having at least two seats, one behind the other, termed the front seat (2) and the rear seat, the said front seat (2) being fitted with a headrest (10) or equivalent, the said accessory being intended to be fitted removably to the backrest of the said front seat (2) in such a way as to form a practical platform for the use of a passenger sitting on the said rear seat, and essentially comprising a housing (20), a rigid frame (22) and a stabilizing means (24), the said housing (20) either being in an approximately vertical plane, in the non-use position, or being in an approximately horizontal plane approximately perpendicular to the plane of the said rigid frame (22), in the use position, the upper part of the said rigid frame (22) being hung by a hanging and height-adjustment unit from the posts of the said headrest (10) of the said front seat (2);
**characterized in that**
the said housing (20) is mounted rotatably on a hinge pin (30) running along the rear edge of the said housing (20) and along the lower part of the said rigid frame (22),
**and in that**
the said stabilizing means consists of a pair of length-adjustable arms (24) designed to project from side walls of the said housing (20) and to rest firmly on the rear face of the backrest (4) of the said front seat (2) to enable the said planes to be adjusted and kept approximately horizontal and vertical, respectively.

2. Accessory according to Claim 1, characterized in that the said housing (20) is hollow in such a way as to create a compartment capable of accommodating a variety of types of equipment.

3. Accessory according to Claim 2, characterized in that the said compartment accommodates a snug-fitting removable inner tray (44).

4. Accessory according to Claim 3, characterized in that the said inner tray (44) has wells of different shapes.

5. Accessory according to Claim 3 or 4, characterized in that it comprises a means of fixing the said inner tray (44) against the inner face of the said rigid frame (22).

6. Accessory according to any one of Claims 2 to 5, characterized in that the said hollow housing (20) comprises an additional lid (148) enabling the said compartment to be closed.

7. Accessory according to Claim 6, characterized in that the said additional lid (148) is mounted rotatably on a hinge pin (30) parallel to or coinciding with that of the said housing (20).

8. Accessory according to any one of the previous claims, characterized in that the said hanging and height-adjustment unit and the said stabilizing means are at least partly housed in side chambers (116) in the said housing (20).

9. Accessory according to any one of the previous claims, characterized in that the said hanging and height-adjustment unit consists at least partly of chains (28), with elastic means (104) returning the said unit to its rest position via a plurality of pulleys (106, 108, 110).

10. Accessory according to Claim 9, characterized in that the said chain (28) consists of a plurality of closely spaced beads, at least one locking fork (112) attached to the said housing (20) being able to be moved between two adjacent beads in order to lock the said chain (28) in a taut position after the said accessory has been opened.

11. Accessory according to Claim 8, 9 or 10, characterized in that a transverse groove (102) is formed across the outer face of the said rigid frame (22) that rests on the said backrest (4) in order to accommodate the said cord (26) and optionally a knob (114) with which to grasp the latter.

12. Accessory according to any one of the previous claims, characterized in that a ring (124) is fitted to at least one post (126) of the said headrest (10), which ring (124) forms a groove (130) that clamps the said cord (26) when the latter is inserted into it.

13. Accessory according to any one of the previous claims, characterized in that the remote free end of each of the said arms (24) is provided with a shoe (48) having a contact surface for contact with the rear face of the backrest (4) of the said front seat (2), the said shoe (48) being mounted by a ball joint or equivalent on the said remote free end.

14. Accessory according to any one of the previous claims, characterized in that at least one supplementary fixing means (34, 38; 118, 122) connects the said accessory to a part of the said front seat (2) or of the backrest (4) thereof.

15. Accessory according to Claim 14, characterized in that the said supplementary fixing means comprises at least one strap (34, 118) extended by a spring means (38, 122), one end of which is designed to attach to the said front seat (2).

16. Accessory according to Claim 15, characterized in that the said fixing means comprises two straps (118) that retract into the said side chambers (116), each having one end that fits into a corresponding keeper (120) fixed to the side of the backrest (4) of the said front seat (2).

17. Accessory according to Claim 16, characterized in that the said straps (118) consist of chains of closely spaced beads, with a locking means optionally being provided to fix its length.

18. Accessory according to any one of the previous claims, characterized in that a levelling means is built into the said housing (20) to allow fine adjustment of at least one of the said approximately vertical and horizontal planes.

19. Accessory according to any one of the previous claims, characterized in that the said rigid frame (22) forms a lid for the said housing (20) when the accessory is in the non-use position.

20. Accessory according to any one of the previous claims, characterized in that a rigid stay means (42) connects the said frame (22) and the said housing (20) in order to determine the maximum functional angle of opening between them.

21. Accessory according to any one of the previous claims, characterized in that an electrical lead capable of being connected to the battery of the said vehicle is provided in order to provide electrical power to the electrically operated devices included in the said accessory.

22. Accessory according to any one of the previous claims, characterized in that the said hinge pin (30) is a breakable pin that breaks in the event of a crash if the said accessory in the form of an attaché case is open.

23. Accessory according to any one of the previous claims, characterized in that the front lateral edge of the said accessory contains an airbag that inflates automatically in the event of a crash.

## Patentansprüche

1. Zubehörteil in Form eines Aktenkoffers für ein Kraftfahrzeug oder dergleichen, das mindestens zwei hintereinander angeordnete Sitze aufweist, den sogenannten Vordersitz (2) und Rücksitz, wobei der Vordersitz (2) mit einer Kopfstütze (10) oder dergleichen versehen ist, wobei das Zubehörteil zur entfernbaren Anordnung an der Rückenlehne des Vordersitzes (2) ausgeführt ist, so daß es eine Nutzunterlage zur Verwendung durch einen auf dem Rücksitz sitzenden Insassen bildet, und im wesentlichen ein Gehäuse (20), einen starren Rahmen (22) und ein Stabilisierungsmittel (24) umfaßt, wobei sich das Gehäuse entweder in Nichtgebrauchsposition in einer im wesentlichen vertikalen Ebene oder in Gebrauchsposition in einer im wesentlichen horizontalen Ebene, die im wesentlichen senkrecht zu der Ebene des starren Rahmens (22) verläuft, befinden kann, wobei der obere Teil des starren Rahmens (22) durch eine Aufhängeeinheit an den Stützen der Kopfstütze (10) des Vordersitzes (2) aufgehängt ist,
dadurch gekennzeichnet, daß
das Gehäuse (20) um eine Achse (30) drehbar angebracht ist, die sich entlang dem hinteren Rand des Gehäuses (20) und unterhalb des unteren Bereichs des starren Rahmens (22) befindet; und daß
das Stabilisierungsmittel aus einem Paar Arme (24) besteht, die in der Länge verstellbar sind, aus den Seitenwänden des Gehäuses (20) vorragen und so ausgeführt sind, daß sie fest an der hinteren Fläche der Rückenlehne (4) des Vordersitzes (2) zur Anlage kommen, so daß die Ebenen verstellt und im wesentlichen horizontal bzw. vertikal gehalten werden können.

2. Zubehörteil nach Anspruch 1, dadurch gekennzeichnet, daß das Gehäuse (20) hohl ist, so daß ein Fach definiert wird, das verschiedene Ausstattungsteile aufnehmen kann.

3. Zubehörteil nach Anspruch 2, dadurch gekennzeichnet, daß das Fach ein eingebettetes, herausnehmbares Innentablett (44) aufnimmt.

4. Zubehörteil nach Anspruch 3, dadurch gekennzeichnet, daß das Innentablett (44) mit Vertiefungen unterschiedlicher Form versehen ist.

5. Zubehörteil nach Anspruch 3 oder 4, dadurch gekennzeichnet, daß es ein Mittel zur Befestigung des Innentabletts (44) an der Innenfläche des starren Rahmens (22) aufweist.

6. Zubehörteil nach einem der Ansprüche 2 bis 5, dadurch gekennzeichnet, daß das hohle Gehäuse (20) einen zusätzlichen Deckel (148) aufweist, der das Schließen des Faches gestattet.

7. Zubehörteil nach Anspruch 6, dadurch gekennzeichnet, daß der zusätzliche Deckel (148) um eine Achse (30) drehbar angebracht ist, welche parallel zu der des Gehäuses (20) verläuft oder damit zusammenfällt.

8. Zubehörteil nach einem der vorhergehenden Ansprüche, dadurch gekennzeichnet, daß die Aufhänge- und Höheneinstelleinheit und das Stabilisierungsmittel zumindest teilweise in seitlichen Kammern (116) des Gehäuses (20) untergebracht sind.

9. Zubehörteil nach einem der vorhergehenden Ansprüche, dadurch gekennzeichnet, daß die Aufhänge- und Höheneinstelleinheit zumindest teilweise aus Ketten (28) und elastischen Mitteln (104), die die Einheit mittels mehrerer Scheiben (106, 108, 110) in ihre Ruheposition zurückführen, besteht.

10. Zubehörteil nach Anspruch 9, dadurch gekennzeichnet, daß die Kette (28) aus mehreren eng benachbarten Kügelchen und mindestens einer fest mit dem Gehäuse (20) verbundenen Verriegelungsgabel (112), die zwischen zwei benachbarten Kügelchen bewegt werden kann, um die Kette (28) nach dem Öffnen des Zubehörteils in gespannter Position zu verriegeln, besteht.

11. Zubehörteil nach Anspruch 8, 9 oder 10, dadurch gekennzeichnet, daß eine Quernut (102) in der Außenfläche des starren Rahmens (22), die an der Rückenlehne (4) zur Anlage kommt, ausgebildet ist, um die Kordel (26) und einen eventuellen olivenförmigen Griff (114) aufzunehmen.

12. Zubehörteil nach einem der vorhergehenden Ansprüche, dadurch gekennzeichnet, daß ein Kranz (124) an mindestens einer Stütze (126) der Kopfstütze (10) angebracht ist, wobei der Kranz (124) eine Kehle (130) definiert, die die Kordel (26) einklemmt, wenn diese dort eingeführt ist.

13. Zubehörteil nach einem der vorhergehenden Ansprüche, dadurch gekennzeichnet, daß das freie distale Ende jedes der Arme (24) mit einem Schuh (48) versehen ist, der eine Fläche zur Herstellung des Kontaktes mit der hinteren Fläche der Rückenlehne (4) des Vordersitzes (2) aufweist, wobei der Schuh (48) mittels eines Kugelgelenks oder dergleichen an dem freien distalen Ende angebracht ist.

14. Zubehörteil nach einem der vorhergehenden Ansprüche, dadurch gekennzeichnet, daß mindestens ein zusätzliches Befestigungsmittel (34, 38; 118, 122) das Zubehörteil mit einem Teil des Vordersitzes (2) oder von dessen Rückenlehne (4) verbindet.

15. Zubehörteil nach Anspruch 14, dadurch gekennzeichnet, daß das zusätzliche Befestigungsmittel mindestens einen Gurt (34, 118) umfaßt, der mittels einer Feder (38, 122) verlängert ist und dessen eines Ende zum Zusammenwirken mit dem Vordersitz (2) ausgeführt ist.

16. Zubehörteil nach Anspruch 15, dadurch gekennzeichnet, daß das Befestigungsmittel zwei Gurte (118) umfaßt, die in die seitlichen Kammern (116) einziehbar sind und die jeweils ein Ende ausweisen, das in eine dazugehörige Aufnahme (120) eintreten kann, die seitlich an der Rückenlehne (4) des Vordersitzes (2) befestigt ist.

17. Zubehörteil nach Anspruch 16, dadurch gekennzeichnet, daß die Gurte (118) aus Ketten mit eng benachbarten Kügelchen bestehen, wobei gegebenenfalls ein Verriegelungsmittel zur Festlegung von deren Länge vorgesehen ist.

18. Zubehörteil nach einem der vorhergehenden Ansprüche, dadurch gekennzeichnet, daß in dem Gehäuse (20) ein Nivelliermittel eingebettet ist, um eine Feineinstellung mindestens einer der im wesentlichen vertikal und horizontal verlaufenden Ebenen zu ermöglichen.

19. Zubehörteil nach einem der vorhergehenden Ansprüche, dadurch gekennzeichnet, daß der starre Rahmen (22) einen Deckel für das Gehäuse (20) bildet, wenn sich das Zubehörteil in Nichtgebrauchsposition befindet.

20. Zubehörteil nach einem der vorhergehenden Ansprüche, dadurch gekennzeichnet, daß ein starres Winkelmittel (42) den Rahmen (22) und das Gehäuse (20) so miteinander verbindet, daß der funktionelle, maximale Öffnungswinkel dazwischen definiert wird.

21. Zubehörteil nach einem der vorhergehenden Ansprüche, dadurch gekennzeichnet, daß eine mit der Batterie des Fahrzeugs verbindbare Leitungsschnur vorgesehen ist, damit eine Stromversorgung der im Zubehörteil befindlichen elektrisch betriebenen Vorrichtungen gewährleistet ist.

22. Zubehörteil nach einem der vorhergehenden Ansprüche, dadurch gekennzeichnet, daß es sich bei der Achse (30) um eine zerbrechbare Achse handelt, die im Falle eines Aufpralls zerbricht, wenn das Zubehörteil in Form eines Aktenkoffers geöffnet ist.

23. Zubehörteil nach einem der vorhergehenden Ansprüche, dadurch gekennzeichnet, daß der vordere Seitenrand des Zubehörteils einen Airbag enthält, der sich bei einem Aufprall automatisch aufbläst.
